Europäisches Patentamt

(19) European Patent Office

Office européen des brevets

(11) Numéro de publication: **0 004 247**
**B1**

(12) **FASCICULE DE BREVET EUROPEEN**

(45) Date de publication du fascicule de brevet: **01.04.81**

(21) Numéro de dépôt: **79420012.1**

(22) Date de dépôt: **23.02.79**

(51) Int. Cl.³: **C 07 C 113/04,**
**C 07 C 107/04**

(54) Procédé d'obtention de sels d'aryldiazonium à partir de vapeurs nitreuses riches en oxyde azotique, solutions aqueuses de ces sels et leur utilisation pour l'obention de composés amino-azo-aromatiques.

(30) Priorité: **06.03.78 FR 7806905**

(43) Date de publication de la demande:
**19.09.79 Bulletin 79/19**

(45) Mention de la délivrance du brevet:
**01.04.81 Bulletin 81/13**

(84) Etats Contractants Désignés:
**BE CH DE GB IT LU NL SE**

(56) Documents cités:
**FR - A - 980 616**
**FR - A - 2 332 976**

(73) Titulaire: **RHONE-POULENC INDUSTRIES**
**22, avenue Montaigne**
**F-75008 Paris (FR)**

(72) Inventeur: **Ratton, Serge**
**Vaulx-En-Milieu**
**F-38290 La Verpilliere (FR)**

(74) Mandataire: **Chichery, Guy et al,**
**RHONE-POULENC INDUSTRIES Centre de**
**Recherches des Carrières Service BREVETS**
**F-69190 Saint-Fons (FR)**

Courier Press, Leamington Spa, England.

## Procédé d'obtention de sels d'aryldiazonium à partir de vapeurs nitreuses riches en oxyde azotique, solutions aqueuses de ces sels et leur utilisation pour l'obtention de composés amino-azo-aromatiques

La présente invention concerne un procédé de préparation de solutions aqueuses de sel de diazonium d'amines aromatiques.

Il est bien connu de préparer des sels de diazonium en solutions aqueuses en introduisant progressivement un nitrite alcalin dans un milieu contenant le sel de l'amine et un acide libre. De tels procédés sont satisfaisants en ce qui concerne les rendements en sel de diazonium, mais, ces procédés présentent cependant un inconvénient important sur le plan industriel. Durant la réaction, on produit en effet et en quantités stoechiométriques des dérivés minéraux (en général chlorure de sodium...) qu'il est nécessaire de séparer, et de traiter en vue de réduire la pollution.

Quelques méthodes de diazotation mettant en oeuvre les vapeurs nitreuses en tant qu'agent de diazotation ont été décrites dans la littérature. La diazotation par les vapeurs nitreuses a été essentiellement réalisée en milieu organique (éther éthylique, benzène, diméthylformamide) sur l'amine libre ou sur le sel d'amine (chlorhydrate...). Il a été montré que l'oxyde azotique NO était de loin le meilleur agent de diazotation [travaux de J. RIGAUDY et Collaborateurs comptes-rendus de l'académie des sciences: 258 (4) 1529—31 (1964). 258 (19) 4799—802 (1964). 261 (25) 5516—19 (1965)]. Il a été indiqué dans ces publications que l'on obtenait de mauvais résultats en utilisant le peroxyde d'azote $NO_2$ ou l'anhydride azoteux $N_2O_3$ en tant qu'agent de diazotation.

Dans le brevet japonais de Sankyo Chemical Industries N° 4331 (67) sous priorité japonaise du 11/5/1964, on a décrit un procédé de préparation de chlorhydrate de diazonium en solution aqueuse par introduction de NO pur dans une solution de chlorhydrate d'aniline contenant de l'acide chlorhydrique libre. Il est particulièrement recommandé dans ce document d'éviter la contamination de l'oxyde d'azote NO par le peroxyde d'azote $NO_2$.

Par ailleurs, il a été montré selon la note de Messieurs A. SANFOURCHE et J. BUREAU [comptes-rendus d l'académie de sciences 202 66—69 6/1 (1936)] que l'on pouvait utiliser en tant qu'agent de diazotation le peroxyde d'azote $NO_2$ ou un mélange équimoléculaire NO, $NO_2$.

Lorsque l'on met en oeuvre les procédés de diazotation par mise en réaction de NO ou de $NO_2$, ou d'un mélange équimoléculaire NO, $NO_2$ sur une solution aqueuse de sel d'amine, contenant éventuellement de l'acide libre, on constate que les rendements en sel de diazonium par rapport à l'agent de diazotation mis en oeuvre sont de l'ordre de 50%. On observe, en outre, que l'oxyde d'azote NO est un agent de diazotation lent sur le plan cinétique. Par ailleurs l'utilisation du peroxyde d'azote $NO_2$ implique la formation d'acide nitrique ce qui est bien sûr un inconvénient sur le plan industriel du fait de l'apparition et de l'augmentation régulière d'une acidité supplémentaire forte.

Il a été maintenant trouvé et c'est ce qui constitue l'objet de la présente invention un procédé de préparation de sels de diazonium en solutions aqueuses par réaction de vapeurs nitreuses utilisées en tant qu'agent de diazotation sur une solution aqueuse de sel d'amine aromatique, caractérisé en ce que les vapeurs contiennent de l'oxyde d'azote et du peroxyde d'azote, l'oxyde d'azote étant en net excès dans le mélange gazeux.

L'emploi d'un tel mélange riche en oxyde d'azote permet de diazoter les amines aromatiques dissoutes ou en suspension dans l'eau à l'état de sel, avec une cinétique rapide et un rendement quantitatif par rapport à l'amine aromatique, et par rapport à l'agent de diazotation consommé. On ne constate pas d'apparition d'acidité supplémentaire.

Plus précisément les vapeurs nitreuses mises en oeuvre selon le procédé de l'invention sont constituées par un mélange NO, $NO_2$, $N_2O_3$ tel qu'à l'équilibre le rapport molaire NO/$NO_2$ soit compris entre 2 et 100 et de préférence entre 4 et 50.

On peut selon un mode de l'invention préparer les vapeurs nitreuses appropriées par simple mélange d'oxyde azotique NO et de péroxyde d'azote $NO_2$, ce mélange s'équilibrant instantanément à température ambiante. Pour que la proportion molaire NO/$NO_2$ soit respectée à l'équilibre dans les limites précédemment indiquées il suffit par exemple que NO et $NO_2$ soient initialement mélangés dans un rapport molaire supérieur à 2; un moyen commode pour y parvenir consiste à entrainer $NO_2$, liquéfié par un courant de NO. On peut évidemment contrôler le mélange NO, $NO_2$, $N_2O_3$ à l'équilibre à l'aide de dispositifs appropriés classiques tel qu'un spectrophotomètre visible UV. Si on est initialement parti d'un mélange non suffisamment riche en NO, on peut injecter à nouveau du NO de manière à ce qu'à l'équilibre le nouveau rapport NO/$NO_2$ soit supérieur à 2.

On peut également préparer les vapeurs nitreuses selon l'invention à partir d'un mélange NO, $N_2O_3$ qui se rééquilibre instantanément à température ordinaire. Un moyen simple pour y parvenir consiste à entrainer dans le réacteur l'anhydride azoteux liquéfié par un courant d'oxyde azotique. Il est évidemment souhaitable de recycler dans le réacteur l'oxyde azotique qui s'échappe de ce dernier. Il est nécessaire que le rapport molaire NO/$N_2O_3$ soit choisi de telle manière que l'on ait à l'équilibre un rapport molaire NO/$NO_2$ supérieur à 2. On peut y parvenir commodément, si le rapport initial NO/$N_2O_3$ est lui-même supérieur à 2.

Les vapeurs nitreuses utilisables selon l'invention peuvent être au besoin diluées par un gaz inerte tel que l'azote.

Le procédé peut être mis en oeuvre de manière simple sur le plan industriel. On disposera d'une part d'une réserve en oxyde azotique NO recyclable et d'autre part d'un courant d'alimentation constitué d'un mélange NO, NO$_2$ en proportion sensiblement stoechiométrique. On sait qu'un tel mélange peut être facilement obtenu par oxydation du gaz ammoniac par l'oxygène. L'oxyde d'azote et le courant d'alimentation seront mélangés afin de satisfaire aux prescriptions précédemment donnés en ce qui concerne le rapport molaire NO/NO$_2$. La formation du sel de diazonium impliquera la consommation en proportions équimoléculaires de NO et NO$_2$.

Le débit d'alimentation sera choisi de telle manière que tout le NO$_2$ admis soit consommé. Il suffira alors de recycler dans le réacteur tout le NO qui s'en échappe.

Le procédé selon l'invention est comme on l'a déjà dit effectué par action des vapeurs nitreuses riches en NO et dont la composition a été précédemment définie sur une solution aqueuse de sel d'amine aromatique. Le sel d'amine est en général le chlorhydrate de l'amine. On peut évidemment utiliser d'autres sels d'amine aromatique tels que les sels d'acides bromhydrique, sulfurique (nécessité d'utiliser un acide dilué pour éviter les réactions secondaires de sulfonation), phosphorique et nitrique ou encore les sels des acides organiques tel que l'acide acétique. On peut également mettre en oeuvre si on le désire un mélange des sels des acides précédents. La concentration du sel de l'amine dans l'eau n'est pas critique. Celle-ci est en général inférieure à la concentration correspondant à la saturation (il est cependant possible d'utiliser une suspension aqueuse de sel d'amine lorsque le sel d'amine est peu soluble) et est en général comprise entre 0,05 et 2,5 mole par litre. Le milieu peut en outre éventuellement contenir de l'acide à l'état libre en proportion peu importante, le proportion de l'acide libre étant tel que le rapport

$$\frac{\text{acide libre}}{\text{sel d'amine}}$$

soit compris entre 0,01 et 0,2. La présence de l'acide libre même à faible concentration favorise en général la stabilité du sel de diazonium.

L'introduction des vapeurs nitreuses peut être poursuivie jusqu'à ce que la transformation du sel d'amine soit totale. On peut cependant introduire les vapeurs nitreuses en quantité inférieure à la théorie. On alors une solution de sel d'aryldiazonium contenant un sel d'amine et qui peut être directement utilisée pour conduire aux composés amino-azo-aromatiques.

Le procédé de préparation de solutions aqueuses de sels de diazonium offre évidemment un intérêt industriel certain dans le cas de l'aniline. On peut cependant utiliser d'autres amines aromatiques telles que les naphtylamines; les anilines halogénées, les alcoylanilines ayant de 1 à 2 groupements alcoyles non fixés à l'azote et contenant de 1 à 4 atomes de carbone, tels que les toluidines ortho meta ou para; les aminophénols; les aminocrésols.

Le procédé selon l'invention est effectué à une température en général comprise entre 0 et 50°C et préféretiellement comprise entre 0 et 20°C. On introduit progressivement les vapeurs nitreuses idoines jusqu'à disparition complète de l'amine. La durée totale de la réaction est en général inférieure à 30 minutes. Les solutions de sels de diazonium obtenues sont des réactifs chimiques convenant à toutes les utilisations enseignées dans la littérature chimique et ceci sans restriction aucune. Ces solutions peuvent en particulier être utilisées directement, pour l'obtention en une étape de dérivé amino-azo-aromatique par introduction progressive de la solution de sel de diazonium dans un milieu contenant de l'amine libre, de l'eau et éventuellement un sel d'amine. Plus précisément, on a determiné des conditions d'utilisation des solutions de sels de diazonium qui permettent de parvenir, avec de bons rendements et une cinétique rapide aux composés amino-azo-aromatiques.

Un autre objet de la présente invention est donc constitué par l'utilisation des solutions de sel de diazonium de l'invention de manière à obtenir avec de bons rendements et une cinétique rapide les composés amino-azo-aromatiques. Cette utilisation est caractérisé en ce que l'on introduit la solution de sel de diazonium selon l'invention dans un milieu contenant essentiellement l'amine aromatique, un sel de l'amine aromatique et de l'eau, les différents pourcentages pondéraux dans le milieu réactionnel en ces trois constituants, respectivement désignés par $\alpha$, $\beta$, $\gamma$ étant tels que l'on ait à tout instant de la réaction les relations suivantes:

$$10 < \alpha < 70$$

$$13 < \beta$$

$$5 < \gamma$$

$$\alpha + \beta + \gamma = 100$$

Dans le domaine des concentrations qui vient d'être défini, on constate que la réaction de réarrangement est complète et ceci pour une durée totale bien inférieure à 2 h à 50°. Si on utilise une teneur en amine aromatique relativement faible (inférieure à 45% par exemple) on a intérêt à augmenter légérement le seuil de la teneur minimum en sel d'amine. Pour des teneurs en amine aromatique voisines de 10%, on a observé que l'on obtient des résultats avantageux lorsque la teneur en sel d'amine n'est pas inférieure à 18% durant toute la réaction. Par ailleurs, les concentrations en réactifs évoluant avec l'avancement de la réaction, on tiendra compte de la quantité maximum d'eau pouvant être introduite avec le sel d'aryldiazonium de manière à respecter les intervalles de concentration précédemment définis.

Le procédé s'applique tout particulièrement à production de p-aminobenzène à partir d'aniline et de chlorhydrate d'aniline.

On peut évidemment préparer des composés amino-aromatiques en mettant en oeuvre des amines aromatiques autres que l'aniline. On a constaté que la fait d'obéir aux règles liant les pourventages pondéraux à savoir:

$$10 < \alpha < 70$$

$$13 < \beta$$

$$5 < \gamma$$

$$\alpha + \beta + \gamma = 100$$

($\alpha$, $\beta$, $\gamma$ représentent alors respectivement les pourcentages pondéraux en amine aromatique, sel d'amine aromatique et eau) permettait d'obtenir avec de bons rendements et une cinétique rapide, les composés amino-azo-aromatiques correspondants. La nature des amines aromatiques est celle qui a été précisée précédemment dans le cadre du procédé d'obtention de solutions aqueuses de sels d'aryldiazonium.

On peut également utiliser d'autres sels d'amines aromatiques pour parvenir aux composés amino-azo-aromatiques. Ces sels ont été définis précédemment lors de la description des solutions aqueuses de sels d'aryldiazonium.

La procédé d'obtention des composés amino-azo-aromatiques est en général réalisé à des températures comprises entre 25 et 100° et de préférence entre 30° et 60°. Dans les zones préférentielles la durée totale de réaction est bien inférieure à 1 h.

Le milieu dans lequel s'effectue la réaction d'obtention du composé amino-azo-aromatique est comme on l'a déjà dit constitué essentiellement par l'amine aromatique, le sel de l'amine aromatique et de l'eau. Selon une variante de la présente invention, il est possible d'ajouter éventuellement au milieu réactionnel constitué par l'amine aromatique, le sel de l'amine aromatique et l'eau, de petites quantités d'un autre corps tels qu'un alcool et qui ne modifie pas de manière fondamentale la mise en oeuvre du procédé et qui respecte la caractéristique principale du procédé à savoir l'obéissance aux règles liant les pourcentages pondéraux $\alpha$, $\beta$, $v$.

Les quantités du composé qui est éventuellement ajouté sont cependant au plus égales à 25% par rapport à la masse globale, amine aromatique, sel d'amine aromatique, eau. L'emploi d'un composé tel qu'un alcool permet de réduire la concentration en amine aromatique tout en maintenant constante la concentration en amine aromatique et permet éventuellement d'éviter l'apparition d'une phase aqueuse dans le milieu de réaction. Pour un procédé industriel cela est avantageux puisque les quantités d'amine aromatique à recycler sont réduites.

L'invention ouvre donc l'accès aux composés amino-azo-aromatiques qui ont une grande importance sur la plan industriel: ils sont des précurseurs de diamines aromatiques, telle que la p-phénylène diamine.

Dans les exemples qui vont suivre, on contrôle le rendement en sel de benzène diazonium par réaction de la solution de benzène diazonium sur l'aniline puis réarrangement du triazène intermédiaire en amino-azo-benzène. On coule ainsi la solution contenant le sel de diazonium dans un mélange contenant de l'aniline en large excès (5 à 7 fois la théorie), du chlorhydrate d'aniline en demi stoechiométrie par rapport à l'aniline et de l'eau. Le mélange est maintenu à 50° et on obtient très rapidement l'amino-azo-benzène (isomère ortho et para) avec un rendement quantitatif. On neutralise alors l'excès de chlorhydrate d'aniline extrait à l'acétate d'éthyle l'aniline et l'amino-azo-benzène et distille l'acétate d'éthyle et l'aniline. On obtient l'amino-azo-benzène brut (ortho + para) que l'on titre par chromatographie en phase vapeur.

### Exemple 1

On condense dans un piège refroidi à −5°C, 2,52 g (0,05477 mole) de peroxyde d'azote $NO_2$ dans lequel en fait barboter jusqu'à saturation de l'oxyde azotique NO: on obtient ainsi un mélange NO, $NO_2$ stoechiométrique soit $N_2O_3$ de 4,16 g.

$N_2O_3$ ainsi obtenu est entrainé en 15 minutes par un courant de NO à raison de 15 l/h dans 300 ml d'une solution aqueuse de 14,46 g de chlorhydrate d'aniline (0,1095 mole) (rapport molaire $NO/N_2O_3$ : 3 ce qui donne à l'équilibre théorique $NO/NO_2 = 7$).

Le courant de NO est recyclé. La température de la solution réactionnelle est égale à 2°C.

On contrôle le rendement de la diazotation après formation d'amino-azo-benzène selon la méthode précédemment décrite. On obtient 21,6 g d'amino-azo-benzène. Le rendement de diazotation est de 100% sur aniline et $N_2O_3$. On vérifie l'absence d'$HNO_3$ dans la solution aqueuse du sel de benzène diazonium.

### Exemple 2

On condense dans un piège refroidi à −5°C, 20 g de peroxyde d'azote $NO_2$ (0,0435 mole) dans lequel on fait barboter jusqu'à saturation de l'oxyde azotique NO : on obtient 3,3 g d'un mélange stoechiométrique $NO + NO_2$ . $N_2O_3$ ainsi obtenu est entrainé par un courant de NO pur à raison de 15 l/h durant 15 minutes dans 300 ml d'une solution aqueuse conteant 13 g de sulfate d'aniline à 58% de pureté (soit 0,0896 mole d'aniline). A l'équilibre le rapport molaire NO/NO₂ est de 8,1. On opère ensuite comme dans l'exemple 1.

Le rendement de diazotation est contrôlé par copulation sur aniline. On obtient 17,2 g d'amino-azo-benzène. Le rendement de diazotation est donc quantitatif sur aniline et N₂O₃.

### Exemple 3

On entraine 3,8 g de N₂O₃ liquéfié (0,05 mole de N₂O₃) par NO pur à raison de 15 l/h durant 20 minutes (même méthode que dans les exemples 1 et 2) dans une solution aqueuse contenant 15,63 g de nitrate d'aniline (0,1 mole). (le rapport molaire à l'équilibre NO/NO₂ est de 9,2).

Le rendement de diazotation est contrôlé par la réaction de copulation sur aniline. Après réarrangement du triazène intermédiaire on récupère l'amino-azo-benzène correspondant à un rendement quantitatif de diazotation.

### Exemple 4

On entraine 3,8 g de N₂O₃ (0,05 mole de N₂O₃) par un courant de NO pur à raison de 15 l/h et durant 20 minutes selon la technique décrite dans l'exemple 3, dans 300 ml d'une solution aqueuse contenant 10,9 g de paraaminophénol (0,1 mole) et 4,9 g d'H₂SO₄ à 100%. Le sulfate d'hydroxy-4 benzène diazonium formé est dosé par potentiométrie dans la soude 0,5 N d'une part et copulation sur résorcine d'autre part. Les résultats font apparaître un résultat quantitatif de diazotation.

### Exemple 5

On entraine durant 16 minutes par un courant de NO pur à raison de 12 l/h 1,6 g de NO₂ liquéfié (0,035 mole) dans 75 ml d'une solution aqueuse maintenue à + 5°C et contenant 0,076 mole de chlorhydrate d'aniline. A l'équilibre le rapport NO/NO₂ est de l'ordre de 6,8.

En fin de réaction, on introduit la solution précédente contenant chlorure de benzène diazonium et chlorhydrate d'aniline en excès dans un mélange maintenu à 50° et contenant 100 ml d'aniline, 80 g de chlorhydrate d'aniline.

En fin de réaction, on récupère 13,05 g d'amino-azo-benzène soit un rendement de diazotation de 95%.

## Revendications

1. Procédé de préparation de sels d'aryl diazonium en solutions aqueuses par réaction de vapeurs nitreuses sur une solution aqueuse de sel d'amine aromatique caractérisé en ce que les vapeurs nitreuses contiennent de l'oxyde d'azote NO et du peroxyde d'azote NO₂, et en quantités telles qu'à l'équilibre le rapport molaire NO/NO₂ soit compris entre 2 et 100.

2. Procédé selon la revendication 1 dans lequel l'amine aromatique est l'aniline, les alcoylanilines ayant de 1 à 2 groupements alcoyles, non fixés sur l'azote et contenant de 1 à 4 atomes de carbone, les aminophénols, les aminocrésols, les naphtylamines, les anilines halogénées.

3. Procédé selon l'une des revendications précédentes dans lequel l'amine aromatique est l'aniline et où le sel d'amine est le chlorhydrate.

4. Solutions aqueuses de sels d'aryl diazonium obtenues selon les procédés définis dans l'une des revendications précédentes.

5. Utilisation des solutions de sels d'aryl diazonium selon l'une des revendications pour l'obtention de composés amino-azo-aromatiques par introduction des dites solutions dans un milieu contenant l'amine aromatique, le sel d'amine aromatique et de l'eau.

6. Utilisation des solutions selon l'une des revendications précédentes pour l'obtention de composés amino-azo-aromatiques par introduction des dites solutions dans un milieu contenant l'amine aromatique le sel d'amine aromatique et de l'eau, les différents pourcentages pondéraux dans le milieu réactionnel en ces trois constituants respectivement désignés par $\alpha$, $\beta$, $\gamma$ étant tels que l'on ait à tout instant de la réaction les relations suivantes:

$$10 < \alpha < 70$$

$$13 < \beta$$

$$5 < \gamma$$

$$\alpha + \beta + \gamma = 100$$

7. Utilisation des solutions selon l'une des revendications 5 et 6 pour l'obtention de p-amino-azo-benzène à partir d'aniline et de chlorhydrate d'aniline.

## Patentansprüche

1. Verfahren zur Herstellung von Aryldiazoniumsalzen in wäßrigen Lösungen durch Reaktion von nitrosen Dämpfen auf eine wäßrige Lösung eines Salzes eines aromatischen Amins, dadurch gekennzeichnet, daß die nitrosen Dämpfe Stickstoffoxid NO und Stickstoffperoxid NO₂ enthalten, und zwar in solchen Mengen, daß beim Gleichgewicht das Molverhältnis NO/NO₂ zwischen 2 und 100 liegt.

2. Verfahren gemäß Anspruch 1, dadurch gekennzeichnet, daß das aromatische Amin Anilin, Alkylaniline mit 1 bis 2 Alkylgruppen, die nicht am Stickstoff fixiert sind und 1 bis 4 Kohlenstoffatome enthalten, Aminophenole, Aminokresole, Naphthylamine, halogenierte Aniline ist.

3. Verfahren gemäß einem der vorhergehenden Ansprüche, dadurch gekennzeichnet, daß das aromatische Amin Anilin ist und das Aminsalz das Hydrochlorid ist.

4. Wäßrige Lösungen von Aryldiazoniumsalzen, erhalten gemäß den Verfahren wie sie in einem der vorhergehenden Ansprüche definiert sind.

5. Verwendung der Aryldiazoniumsalzlösungen gemäß einem der Ansprüche zur Erzielung von amino-azo-aromatischen Verbindungen durch Einführung dieser Lösungen in ein Milieu, das das aromatische Amin, das Salz des aromatischen Amins und Wasser enthält.

6. Verwendung der Lösungen gemäß einem der vorhergehenden Ansprüche zur Erzielung der amino-azo-aromatischen Verbindungen durch Einführung dieser Lösungen in ein Milieu, das das aromatische Amin, das Salz des aromatischen Amins und Wasser enthält, wobei die verschiedenen Gewichtsprozentsätze in dem Reaktionsmilieu an diesen drei Bestandteilen, welche mit $\alpha$, $\beta$ und $\gamma$ bezeichnet werden, derart sind, daß man in jedem Augenblick der Reaktion die folgenden Relationen hat:

$$10 < \alpha < 70$$

$$13 < \beta$$

$$5 < \gamma$$

$$\alpha + \beta + \gamma = 100$$

7. Verwendung der Lösungen gemäß einem der Ansprüche 5 und 6 zur Erzielung von p-Amino-azo-benzol aus Anilin und Anilinhydrochlorid.

## Claims

1. Process for the preparation of aryldiazonium salts in aqueous solutions by reacting nitrous vapours with an aqueous solution of an aromatic amine salt, characterised in that the nitrous vapours contain nitric oxide NO, and nitrogen peroxide $NO_2$, the mixture being such that the molar ratio $NO/NO_2$ at equilibrium is between 2 and 100.

2. Process according to Claim 1, in which the aromatic amine is chosen from amongst aniline, alkylanilines having from 1 to 2 alkyl groups which are not fixed to the nitrogen and contain from 1 to 4 carbon atoms, aminophenols, aminocresols, naphthylamines and halogenoanilines.

3. Process according to one of Claims 1 to 2, in which the aromatic amine is aniline and in which the amine salt is the hydrochloride.

4. Aqueous solutions of an aryldiazonium salts, obtained in accordance with the processes defined in one of the preceding claims.

5. Use of the solutions of aryldiazonium salts according to preceding claims for the production of aromatic aminoazo compounds by introducing the said solutions into a medium containing the aromatic amine, the aromatic amine salt and water.

6. Use of the solutions according to preceding claims for the production of aromatic aminoazo compounds by introducing the said solutions into a medium containing the aromatic amine, the aromatic amine salt and water, the various percentages by weight of these three constituents in the reaction medium, respectively denoted by $\alpha$, $\beta$ and $\gamma$, being such that the following relationships apply at any instant during the reaction:

$$10 < \alpha < 70$$

$$13 < \beta$$

$$5 < \gamma$$

$$\alpha + \beta + \gamma = 100$$

7. Use of the solutions according to one of Claims 5 and 6 for the production of p-aminoazobenzene from aniline and aniline hydrochloride.